(19) Europäisches Patentamt
European Patent Office
Office européen des brevets

(11) EP 3 864 083 B1

(12) FASCICULE DE BREVET EUROPEEN

(45) Date de publication et mention de la délivrance du brevet:
**30.11.2022 Bulletin 2022/48**

(21) Numéro de dépôt: **19801947.3**

(22) Date de dépôt: **03.10.2019**

(51) Classification Internationale des Brevets (IPC):
***C08L 9/00*** *(2006.01)* ***B60C 1/00*** *(2006.01)*
***C08K 3/04*** *(2006.01)*

(52) Classification Coopérative des Brevets (CPC):
(C-Sets disponibles)
**C08L 7/00; B60C 1/0025;** C08K 2201/006 (Cont.)

(86) Numéro de dépôt international:
**PCT/FR2019/052340**

(87) Numéro de publication internationale:
**WO 2020/074806 (16.04.2020 Gazette 2020/16)**

(54) **COMPOSITION DE CAOUTCHOUC**

KAUTSCHUKZUSAMMENSETZUNG

RUBBER COMPOSITION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.10.2018 FR 1859357**

(43) Date de publication de la demande:
**18.08.2021 Bulletin 2021/33**

(73) Titulaire: **COMPAGNIE GENERALE DES ETABLISSEMENTS MICHELIN**
**63000 Clermont-Ferrand (FR)**

(72) Inventeurs:
- **CROCHET, Aurore**
  **63040 CLERMONT-FERRAND Cedex 9 (FR)**
- **LEMERLE, Frédéric**
  **63040 CLERMONT-FERRAND Cedex 9 (FR)**
- **ARAUJO DA SILVA, José-Carlos**
  **63040 CLERMONT-FERRAND Cedex 9 (FR)**

(74) Mandataire: **Gandon-Pain, Sylvie**
**Manufacture Française des Pneumatiques Michelin**
**CBS/CORP/J/PI - F35 - Ladoux**
**23, place des Carmes-Déchaux**
**63040 Clermont-Ferrand Cedex 9 (FR)**

(56) Documents cités:
**US-A1- 2013 324 660**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

(52) Classification Coopérative des Brevets (CPC): (Cont.)

C-Sets
**C08L 7/00, C08L 23/083, C08L 91/00, C08K 3/04, C08K 5/09, C08K 3/22, C08K 3/06, C08K 5/18, C08K 5/47**

## Description

Le domaine de la présente invention est celui des compositions de caoutchouc renforcées de noir de carbone et comportant un élastomère diénique fortement saturé, les compositions de caoutchouc étant particulièrement destinées à être utilisées dans un pneumatique, plus particulièrement dans un flanc de pneumatique.

Un pneumatique comporte usuellement deux bourrelets destinés à entrer en contact avec une jante, un sommet composé d'au moins une armature de sommet et une bande de roulement, deux flancs, le pneumatique étant renforcé par une armature de carcasse ancrée dans les deux bourrelets. Un flanc est une couche élastomère disposée à l'extérieur de l'armature de carcasse par rapport à la cavité interne du pneumatique, entre le sommet et le bourrelet de sorte à couvrir totalement ou partiellement la zone de l'armature de carcasse s'étendant du sommet au bourrelet.

Dans la fabrication conventionnelle d'un pneumatique, les différents composants constitutifs du sommet, de l'armature de carcasse, des bourrelets et des flancs sont assemblés pour former un bandage de pneumatique. L'étape d'assemblage est suivie d'une étape de conformation du bandage pour donner la forme torique à l'assemblage avant l'étape de cuisson sous presse. Les flancs sont exposés à la fois à l'action de l'ozone et à des cycles de déformation comme la flexion au cours du roulage du pneumatique. Les cycles de déformation conjugués à l'action de l'ozone peuvent faire apparaître des craquelures ou fissures dans le flanc, empêchant l'utilisation du pneumatique indépendamment de l'usure de la bande de roulement. Par conséquent, il est recherché des compositions de caoutchouc qui soient très cohésives pour constituer par exemple des flancs de pneumatique par leur capacité à subir de grandes déformations sans se rompre, même en la présence d'une amorce de fissure.

Pour minimiser l'action de l'ozone sur des compositions de caoutchouc, il est connu d'utiliser des copolymères présentant une sensibilité moindre à l'oxydation, comme par exemple les élastomères diéniques fortement saturés, élastomères comprenant des unités éthylène à un taux molaire supérieur à 50% en mole des unités monomère de l'élastomère. On peut citer par exemple les copolymères d'éthylène et de 1,3-diène qui contiennent plus de 50% en mole d'éthylène, en particulier les copolymères d'éthylène et de 1,3-butadiène. L'utilisation de tels copolymères d'éthylène et de 1,3-butadiène dans une bande de roulement d'un pneumatique est par exemple décrite dans le document WO 2014114607 A1 et a pour effet de conférer de bonnes propriétés de résistance à l'usure et de résistance au roulement au pneumatique. L'utilisation de copolymères d'éthylène et de 1,3-diène dans une composition pour flanc est aussi par exemple décrite dans le document EP 2 682 423 A1 pour augmenter la résistance à l'ozone. Néanmoins, il apparait une déchéance des propriétés de cohésion de la composition de caoutchouc dès lors que le taux molaire d'éthylène dans le copolymère est supérieur à 50%.

La Demanderesse a découvert une composition de caoutchouc comprenant un copolymère d'éthylène et de 1,3-diène avec une teneur molaire en éthylène supérieure à 50% qui présente un compromis amélioré entre les propriétés de cohésion et de résistance à l'ozone.

Ainsi, un premier objet de l'invention est une composition de caoutchouc à base au moins de caoutchouc naturel, d'un copolymère d'éthylène et d'un 1,3-diène, d'un noir de carbone et d'un système de réticulation, le taux de caoutchouc naturel dans la composition de caoutchouc étant supérieur à 50 pce, les unités éthylène dans le copolymère représentant plus de 50% en mole des unités monomères du copolymère.

Un deuxième objet de l'invention est un pneumatique qui comprend une composition de caoutchouc conforme à l'invention, de préférence dans une portion ou la totalité d'un flanc du pneumatique.

## I. DESCRIPTION DETAILLEE DE L'INVENTION

Tout intervalle de valeurs désigné par l'expression "entre a et b" représente le domaine de valeurs supérieur à "a" et inférieur à "b" (c'est-à-dire bornes a et b exclues) tandis que tout intervalle de valeurs désigné par l'expression "de a à b" signifie le domaine de valeurs allant de "a" jusqu'à "b" (c'est-à-dire incluant les bornes strictes a et b). L'abréviation "pce" signifie parties en poids pour cent parties d'élastomère (du total des élastomères si plusieurs élastomères sont présents).

Par l'expression composition "à base de", il faut entendre dans la présente description une composition comportant le mélange et/ou le produit de réaction in situ des différents constituants utilisés, certains de ces constituants de base (par exemple l'élastomère, la charge ou les constituants du système de vulcanisation ou autre additif classiquement utilisé dans une composition de caoutchouc destinée à la fabrication de pneumatique) étant susceptibles de, ou destinés à réagir entre eux, au moins en partie, lors des différentes phases de fabrication de la composition destinée à la fabrication de pneumatique.

Dans la présente demande, on entend par « l'ensemble des unités monomères de l'élastomère » ou « la totalité des unités monomères de l'élastomère » tous les motifs de répétitions constitutifs de l'élastomère qui résultent de l'insertion des monomères dans la chaîne élastomère par polymérisation. Sauf indication contraire, les teneurs en une unité monomère ou motif de répétition dans l'élastomère diénique fortement saturé sont données en pourcentage molaire calculé sur la base de l'ensemble des unités monomères de l'élastomère.

Les composés mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les élastomères, les plastifiants, les charges ...

Le copolymère d'éthylène et de 1,3-diène utile aux besoins de l'invention, est un élastomère de préférence statistique, qui comprend des unités éthylène résultant de la polymérisation d'éthylène. De manière connue, l'expression « unité éthylène » fait référence au motif $-(CH_2-CH_2)-$ résultant de l'insertion de l'éthylène dans la chaîne élastomère. Dans le copolymère d'éthylène et de 1,3-diène, les unités éthylène représentent plus de 50% en mole des unités monomères du copolymère. De préférence, les unités éthylène dans le copolymère représentent plus de 60%, avantageusement plus de 70% en mole des unités monomères du copolymère. Selon l'un quelconque des modes de réalisation de l'invention, y compris leur variantes préférentielles, l'élastomère diénique fortement saturé comprend préférentiellement au plus 90% en mole d'unité éthylène.

Le copolymère utile aux besoins de l'invention, également désigné ci-après sous l'appellation d'élastomère diénique fortement saturé, comprend aussi des unités 1,3-diène résultant de la polymérisation d'un 1,3-diène. De manière connue, l'expression « unité 1,3-diène » fait référence aux unités résultant de l'insertion du 1,3-diène par une addition 1,4, une addition 1,2 ou une addition 3,4 dans le cas de l'isoprène. Les unités 1,3-diène sont celles par exemple d'un 1,3-diène ou d'un mélange de 1,3-diènes, le ou les 1,3-diènes ayant 4 à 12 atomes de carbone, tels que tout particulièrement le 1,3-butadiène et l'isoprène. De préférence, le 1,3-diène est le 1,3-butadiène.

Selon un premier mode de réalisation de l'invention, le copolymère d'éthylène et d'un 1,3-diène contient des unités de formule (I). La présence de motif cyclique saturé à 6 membres, 1,2-cyclohexanediyle, de formule (I) comme unité monomère dans le copolymère peut résulter d'une série d'insertions très particulières de l'éthylène et du 1,3-butadiène dans la chaîne polymère au cours de sa croissance.

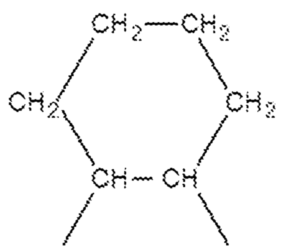

(I)

Selon un deuxième mode de réalisation préférentiel de l'invention, le copolymère d'éthylène et d'un 1,3-diène contient des unités de formule (II).

$$-CH_2-CH(CH=CH_2)- \qquad \text{(II)}$$

Selon un troisième mode de réalisation préférentiel de l'invention, le copolymère d'éthylène et d'un 1,3-diène contient des unités de formule (I) et de formule (II).

Selon un quatrième mode de réalisation de l'invention, l'élastomère diénique fortement saturé est dépourvu d'unités de formule (I). Selon ce quatrième mode de réalisation, le copolymère d'éthylène et d'un 1,3-diène contient de préférence des unités de formule (II).

Lorsque l'élastomère diénique fortement saturé comprend des unités de formule (I) ou des unités de formule (II) ou encore des unités de formule (I) et des unités de formule (II), les pourcentages molaires des unités de formule (I) et des unités de formule (II) dans l'élastomère diénique fortement saturé, respectivement o et p, satisfont de préférence à l'équation suivante (eq. 1), de manière plus préférentielle à l'équation (eq. 2), o et p étant calculés sur la base de l'ensemble des unités monomères de l'élastomère diénique fortement saturé.

$$0 < o+p \leq 25 \qquad \text{(eq. 1)}$$

$$0 < o+p < 20 \qquad \text{(eq. 2)}$$

Selon le premier mode de réalisation, selon le deuxième mode de réalisation de l'invention, selon le troisième mode de réalisation et selon le quatrième mode de réalisation, y compris leurs variantes préférentielles, l'élastomère diénique fortement saturé est préférentiellement un copolymère statistique.

L'élastomère diénique fortement saturé, en particulier selon le premier mode de réalisation, selon le deuxième mode de réalisation, selon le troisième mode de réalisation et selon le quatrième mode de réalisation, peut être obtenu

selon différentes méthodes de synthèses connues de l'homme du métier, notamment en fonction de la microstructure visée de l'élastomère diénique fortement saturé. Généralement, il peut être préparé par copolymérisation au moins d'un 1,3-diène, de préférence le 1,3-butadiène, et d'éthylène et selon des méthodes de synthèse connues, en particulier en présence d'un système catalytique comprenant un complexe métallocène. On peut citer à ce titre les systèmes catalytiques à base de complexes métallocènes, lesquels systèmes catalytiques sont décrits dans les documents EP 1 092 731, WO 2004035639, WO 2007054223 et WO 2007054224 au nom de la Demanderesse. L'élastomère diénique fortement saturé, y compris lorsqu'il est statistique, peut être préparé aussi par un procédé utilisant un système catalytique de type préformé comme ceux décrits dans les documents WO 2017093654 A1, WO 2018020122 A1 et WO 2018020123 A1.

L'élastomère diénique fortement saturé peut être constitué d'un mélange de copolymères d'éthylène et de 1,3-diène qui se différencient des uns des autres par leurs microstructures ou par leurs macrostructures.

Selon le premier mode de réalisation de l'invention, selon le deuxième mode de réalisation de l'invention, selon le troisième mode de réalisation et selon le quatrième mode de réalisation, l'élastomère diénique fortement saturé est de préférence un copolymère d'éthylène et de 1,3-butadiène, de manière plus préférentielle un copolymère d'éthylène et de 1,3-butadiène statistique.

La composition de caoutchouc selon l'invention a pour caractéristique essentielle de comprendre plus de 50 pce de caoutchouc naturel. De préférence, le taux de caoutchouc naturel dans la composition de caoutchouc est supérieur à 55 pce et inférieur ou égal à 80 pce. De manière plus préférentielle, elle varie dans un domaine allant de 60 à 80 pce.

Le taux de copolymère d'éthylène et d'un 1,3-diène utile aux besoins de l'invention, notamment de copolymère d'éthylène et de 1,3-butadiène dans la composition de caoutchouc varie de préférence dans un domaine allant de 20 à 40 pce.

Avantageusement, la composition de caoutchouc comprend de 20 à 40 pce de copolymère d'éthylène et de 1,3-diène, en particulier de copolymère d'éthylène et de 1,3-butadiène, et de 60 à 80 pce de caoutchouc naturel.

La composition de caoutchouc utile aux besoins de l'invention a pour caractéristique essentielle de comprendre un noir de carbone à titre de charge renforçante. Une charge renforçante consiste typiquement en des nanoparticules dont la taille moyenne (en masse) est inférieure au micromètre, généralement inférieure à 500 nm, le plus souvent comprise entre 20 et 200 nm, en particulier et plus préférentiellement comprise entre 20 et 150 nm. De préférence, le taux de noir de carbone dans la composition de caoutchouc est compris dans un domaine allant de 25 pce à 65 pce. Au-dessous de 25 pce, le niveau de renforcement peut s'avérer insuffisant pour certaines applications de la composition de caoutchouc dans le pneumatique. Au-dessus de 65 pce, la composition de caoutchouc peut devenir trop rigide pour certaines applications de la composition de caoutchouc dans le pneumatique. Par exemple, pour une application de la composition de caoutchouc dans un flanc pour pneumatique, le taux de noir de carbone est compris avantageusement dans un domaine allant de 25 pce à 65 pce.

Comme noirs de carbone conviennent tous les noirs de carbone, notamment les noirs conventionnellement utilisés dans les pneumatiques ou leurs bandes de roulement (noirs dits de grade pneumatique). Parmi ces derniers, on citera plus particulièrement les noirs de carbone renforçants des séries 100, 200, 300, ou les noirs de série 500, 600 ou 700 (grades ASTM), comme par exemple les noirs N115, N134, N234, N326, N330, N339, N347, N375, N550, N683, N772). Lorsque la composition de caoutchouc conforme à l'invention est utilisée dans un flanc pour pneumatique, le noir de carbone est préférentiellement un noir de carbone des séries 300 ou un noir de carbone ayant une surface spécifique BET allant de 70 $m^2/g$ à 100 $m^2/g$. Précisons que la surface spécifique BET peut être mesurée selon la norme ASTM D6556-09 [méthode multipoints (5 points) - gaz : azote - domaine de pression relative P/P0 : 0.05 à 0.30].

Le système de réticulation peut être à base soit de soufre, soit de donneurs de soufre et/ou de peroxyde et/ou de bismaléimides. De préférence, le système de réticulation est préférentiellement un système de vulcanisation, c'est-à-dire un système à base de soufre (ou d'un agent donneur de soufre) et d'un accélérateur de vulcanisation. On peut utiliser comme accélérateur de vulcanisation tout composé susceptible d'agir comme accélérateur de vulcanisation des élastomères diéniques en présence de soufre, notamment des accélérateurs du type thiazoles ainsi que leurs dérivés, des accélérateurs de types sulfénamides, thiurames, dithiocarbamates, dithiophosphates, thiourées et xanthates. A titre d'exemples de tels accélérateurs, on peut citer notamment les composés sulfénamides suivants : N-cyclohexyl-2-benzothiazyle sulfénamide ("CBS"), N,N-dicyclohexyl-2-benzothiazyle sulfénamide ("DCBS"), N-ter-butyl-2-benzothiazyle sulfénamide ("TBBS") et les mélanges de ces composés.

Le soufre est utilisé à un taux préférentiel compris entre 0.3 pce et 10 pce, plus préférentiellement entre 0.3 et 5 pce. L'accélérateur primaire de vulcanisation est utilisé à un taux préférentiel compris entre 0.5 et 10 pce, plus préférentiellement compris entre 0.5 et 5 pce.

La réticulation (ou cuisson), le cas échéant la vulcanisation, est conduite de manière connue à une température généralement comprise entre 130°C et 200°C, pendant un temps suffisant qui peut varier par exemple entre 5 et 90 min en fonction notamment de la température de cuisson, du système de réticulation adopté et de la cinétique de réticulation de la composition considérée.

La composition de caoutchouc utile aux besoins de l'invention peut comporter également tout ou partie des

additifs usuels habituellement utilisés dans les compositions d'élastomères destinées à être utilisées dans un pneumatique, comme par exemple des agents de mise en œuvre, des plastifiants, des pigments, des agents de protection tels que cires anti-ozone, anti-ozonants chimiques, anti-oxydants. Comme plastifiants conviennent tous les plastifiants conventionnellement utilisés dans les pneumatiques. A ce titre, on peut citer les huiles préférentiellement non aromatiques ou très faiblement aromatiques choisis dans le groupe constitué par les huiles naphténiques, les huiles paraffiniques, les huiles MES, les huiles TDAE, les huiles végétales, les plastifiants éthers, les plastifiants esters.

Lorsque la composition de caoutchouc est constitutive d'une partie ou de la totalité des flancs d'un pneumatique, elle comprend de préférence un plastifiant dont le taux dans la composition de caoutchouc est ajusté pour conférer la rigidité adéquate pour une utilisation en flanc. Typiquement, la quantité de plastifiant varie alors de 20 pce à 60 pce pour un taux de noir de carbone compris dans un domaine allant de 25 pce à 65 pce. De préférence, la quantité de plastifiant varie de 20 à 50 pce.

La composition de caoutchouc peut être fabriquée dans des mélangeurs appropriés, en utilisant deux phases de préparation successives selon une procédure générale bien connue de l'homme du métier : une première phase de travail ou malaxage thermo-mécanique (parfois qualifiée de phase "non-productive") à haute température, jusqu'à une température maximale comprise entre 110°C et 190°C, de préférence entre 130°C et 180°C, suivie d'une seconde phase de travail mécanique (parfois qualifiée de phase "productive") à plus basse température, typiquement inférieure à 110°C, par exemple entre 40°C et 100°C, phase de finition au cours de laquelle est incorporé le soufre ou le donneur de soufre et l'accélérateur de vulcanisation.

A titre d'exemple, la première phase (non-productive) est conduite en une seule étape thermomécanique au cours de laquelle on introduit, dans un mélangeur approprié tel qu'un mélangeur interne usuel, tous les constituants nécessaires, les éventuels agents de mise en œuvre complémentaires et autres additifs divers, à l'exception du soufre et de l'accélérateur de vulcanisation. La durée totale du malaxage, dans cette phase non-productive, est de préférence comprise entre 1 et 15 min. Après refroidissement du mélange ainsi obtenu au cours de la première phase non-productive, on incorpore alors le soufre et l'accélérateur de vulcanisation à basse température, généralement dans un mélangeur externe tel qu'un mélangeur à cylindres; le tout est alors mélangé (phase productive) pendant quelques minutes, par exemple entre 2 et 15 min.

La composition finale ainsi obtenue est ensuite calandrée, par exemple sous la forme d'une feuille ou d'une plaque, notamment pour une caractérisation au laboratoire, ou encore extrudée, pour former par exemple un profilé de caoutchouc utilisé pour la fabrication de semi-finis tels qu'une couche de flanc pour pneumatique.

Le pneumatique, autre objet de l'invention, comprend une composition de caoutchouc conforme à l'invention. De préférence, le pneumatique comporte un flanc dont une portion ou la totalité est constituée d'une composition de caoutchouc conforme à l'invention, laquelle composition comprend de préférence un plastifiant. De manière plus préférentielle, dans le pneumatique conforme à l'invention, la composition de caoutchouc comprenant un plastifiant est constitutive des flancs du pneumatique. Selon ce mode de réalisation plus préférentiel de l'invention et pour un taux de noir de carbone compris dans un domaine allant de 25 pce à 65 pce, la quantité de plastifiant varie de 20 pce à 60 pce, avantageusement de 20 pce à 50 pce. Selon une variante de ce mode de réalisation plus préférentiel de l'invention, le noir de carbone a une surface spécifique BET allant de 70 $m^2/g$ à 100 $m^2/g$.

La composition de caoutchouc et le pneumatique conformes à l'invention peuvent être à l'état cru (c'est-à-dire avant réticulation) ou à l'état cuit (c'est-à-dire après réticulation).

Les caractéristiques précitées de la présente invention, ainsi que d'autres, seront mieux comprises à la lecture de la description suivante de plusieurs exemples de réalisation de l'invention, donnés à titre illustratif et non limitatif.

## II. EXEMPLES DE REALISATION DE L'INVENTION

### II.1 Tests et mesures :

#### II.1-1 Détermination de la microstructure des élastomères :

La microstructure des élastomères est déterminée par analyse RMN $^1H$, supplée par l'analyse RMN $^{13}C$ lorsque la résolution des spectres RMN du $^1H$ ne permet pas l'attribution et la quantification de toutes les espèces. Les mesures sont réalisées à l'aide d'un spectromètre RMN BRUKER 500MHz à des fréquences de 500.43 MHz pour l'observation du proton et 125.83MHz pour l'observation du carbone.

Pour les élastomères non solubles mais ayant la capacité de gonfler dans un solvant, est utilisée une sonde HRMAS 4mm z-grad permettant d'observer le proton et le carbone en mode découplé du proton. Les spectres sont acquis à des vitesses de rotation de 4000Hz à 5000Hz.

Pour les mesures sur des élastomères solubles, est utilisée une sonde RMN liquide permettant d'observer le proton et le carbone en mode découplé du proton.

La préparation des échantillons non solubles est faite dans des rotors remplis avec le matériau analysé et un

solvant deutéré permettant le gonflement, en général du chloroforme deutéré (CDCl3). Le solvant utilisé doit toujours être deutéré et sa nature chimique peut être adaptée par l'homme du métier. Les quantités de matériau utilisées sont ajustées de façon à obtenir des spectres avec une sensibilité et une résolution suffisante. Les échantillons solubles sont mis en solution dans un solvant deutéré (environ 25mg d'élastomère dans 1mL), en général du chloroforme deutéré (CDCl3). Le solvant ou coupage de solvant utilisé doit toujours être deutéré et sa nature chimique peut être adaptée par l'homme du métier.

Dans les deux cas (échantillon soluble ou échantillon gonflé):

Pour la RMN du proton est utilisée une séquence simple impulsion de 30°. La fenêtre spectrale est réglée pour observer l'ensemble des raies de résonances appartenant aux molécules analysées. Le nombre d'accumulation est réglé afin d'obtenir un rapport signal sur bruit suffisant pour la quantification de chaque motif. Le délai de recyclage entre chaque impulsion est adapté pour obtenir une mesure quantitative.

Pour la RMN du carbone est utilisée une séquence simple impulsion 30° avec un découplage du proton uniquement pendant l'acquisition pour éviter les effets « Overhauser Nucléaire » (NOE) et rester quantitatif. La fenêtre spectrale est réglée pour observer l'ensemble des raies de résonances appartenant aux molécules analysées. Le nombre d'accumulation est réglé afin d'obtenir un rapport signal sur bruit suffisant pour la quantification de chaque motif. Le délai de recyclage entre chaque impulsion est adapté pour obtenir une mesure quantitative.

Les mesures de RMN sont réalisées à 25°C.

<u>11.1-2 Résistance mécanique en présence d'amorce de fissure (déchirabilité) :</u>

La force et la déformation de déchirabilité sont mesurées sur une éprouvette étirée à 500 mm/min pour provoquer la rupture de l'éprouvette. L'éprouvette de traction est constituée par une plaque de caoutchouc de forme parallélépipédique, par exemple d'épaisseur comprise entre 1 et 2 mm, de longueur entre 130 et 170 mm et de largeur entre 10 et 15 mm, les deux bords latéraux étant chacun recouverts dans le sens de la longueur d'un bourrelet de caoutchouc cylindrique (diamètre 5 mm) permettant l'ancrage dans les mors de la machine de traction. 3 entailles très fines de longueur comprise entre 15 et 20 mm sont réalisées à l'aide d'une lame de rasoir, à mi-largeur et alignées dans le sens de la longueur de l'éprouvette, une à chaque extrémité et une au centre de cette dernière, avant le démarrage du test. On détermine la force (N/mm) à exercer pour obtenir la rupture et on mesure l'allongement à la rupture et la contrainte rupture. Le test a été conduit à l'air, à une température de 100°C. Plus les valeurs de déformation et de force à la rupture ou d'énergie à la rupture sont élevées, meilleure est la résistance à la propagation de fissure de la composition de caoutchouc bien que présentant des amorces de fissure, ce qui traduit une bonne cohésion de la composition de caoutchouc. Les résultats sont donnés en base 100 par rapport à un témoin.

<u>11.1-3 Essais de traction</u> :

Les essais d'allongement rupture (AR%) et de contrainte rupture (CR) sont basées sur la norme NF ISO 37 de Décembre 2005 sur une éprouvette haltère de type H2 et sont mesurés à une vitesse de traction de 500 mm/min. L'allongement rupture est exprimé en % d'allongement. La contrainte rupture est exprimée en MPa. Toutes ces mesures de traction sont effectuées à 60°C. Les résultats sont donnés en base 100 par rapport à un témoin.

<u>11.1-4 Résistance à l'ozone :</u>

La résistance à l'ozone a été évaluée en utilisant le test de trapèze où la fissuration est déterminée après l'allongement de l'échantillon en conditions statiques. Les échantillons soumis à une contrainte sont plus susceptibles de se fissurer. Les échantillons ont une forme en os de chien et ont été coupés avec une matrice et chargés dans un support en forme de V. Le support en V permet d'obtenir des déformations de l'échantillon de 10% à 150%. Le support en V avec les échantillons est placé dans une chambre d'ozone. Les conditions de la chambre d'ozone ont été fixées à 50 parties par cent millions d'ozone (ppcm) et à une température de 38°C pendant 144h. Les résultats des tests de trapèze indiquent l'allongement auquel les premières fissures sont apparues. Plus l'allongement pour lequel les fissures apparaissent est élevé et plus le matériau est résistant à la fissuration sous ozone.

**<u>II.2 Préparation des compositions de caoutchouc :</u>**

Quatre compositions de caoutchouc C1 à C4 dont le détail de la formulation figure dans le tableau 1, ont été préparées de la manière suivante :
On introduit dans un mélangeur interne (taux de remplissage final : environ 70% en volume), dont la température initiale

de cuve est d'environ 80°C, successivement les élastomères, le noir de carbone ainsi que les divers autres ingrédients à l'exception du soufre et de l'accélérateur de vulcanisation. On conduit alors un travail thermomécanique (phase non-productive) en une étape, qui dure au total environ 3 à 4 min, jusqu'à atteindre une température maximale de « tombée » de 165°C. On récupère le mélange ainsi obtenu, on le refroidit puis on incorpore le soufre et l'accélérateur de vulcanisation sur un mélangeur (homo-finisseur) à 30 °C, en mélangeant le tout (phase productive) pendant un temps approprié (par exemple une dizaine de minutes).

Les compositions ainsi obtenues sont ensuite calandrées soit sous la forme de plaques (épaisseur 2 à 3mm) ou de feuilles fines de caoutchouc pour la mesure de leur propriétés physiques ou mécaniques, soit extrudées pour former par exemple un profilé pour un pneumatique.

Les quatre compositions de caoutchouc contiennent un élastomère diénique fortement saturé dont le taux molaire d'éthylène est supérieur à 50% et du caoutchouc naturel. Les compositions de caoutchouc C1 et C2 ne sont pas conformes à l'invention, puisque le taux de caoutchouc naturel est de 40 pce et 50 pce respectivement. Les compositions de caoutchouc C3 et C4 sont conformes à l'invention, le taux de caoutchouc naturel étant supérieur à 50 pce.

L'élastomère diénique fortement saturé (EBR) est préparé selon le mode opératoire suivant : 30 mg de métallocène $[\{Me_2SiFlu_2Nd(\mu\text{-}BH_4)_2Li(THF)\}_2$, le symbole Flu représentant le groupe fluorényle de formule $C_{13}H_8]$ sont introduits dans une première bouteille Steinie en boite à gant. Le co-catalyseur, le butyloctylmagnésium mis au préalable en solution dans 300 ml de méthylcyclohexane dans une seconde bouteille Steinie, est introduit dans la première bouteille Steinie contenant le métallocène dans les proportions suivantes 0.00007 mol/L de métallocène, 0.0004 mol/L de co-catalyseur. Après 10 minutes de contact à température ambiante est obtenue une solution catalytique. La solution catalytique est ensuite introduite dans le réacteur de polymérisation. La température dans le réacteur est alors augmentée à 80°C. Lorsque cette température est atteinte, la réaction démarre par injection d'un mélange gazeux d'éthylène et de 1,3-butadiène (80/20 % molaire) dans le réacteur. La réaction de polymérisation se déroule à une pression de 8 bars. Les proportions de métallocène et de co-catalyseur sont respectivement de 0.00007 mol/L et 0.0004 mol/L. La réaction de polymérisation est stoppée par refroidissement, dégazage du réacteur et ajout d'éthanol. Un anti-oxydant est ajouté à la solution de polymère. Le copolymère est récupéré par séchage en étuve sous vide.

### II.3 Résultats :

Les résultats figurent dans le tableau 1. A l'exception de la note attribuée pour quantifier la sévérité de l'attaque à l'ozone, les résultats sont indiqués en indice de performance par rapport à un témoin. La valeur du témoin, composition C2, étant arbitrairement fixée à 100, une valeur supérieure à 100 indique une performance améliorée.

Les résultats montrent que les compositions de caoutchouc C3 et C4 sont les compositions de caoutchouc qui présentent la meilleure cohésion : à la fois les allongements à la rupture en traction et l'énergie à la rupture en déchirabilité sont les meilleurs par rapport au témoin C2 et par rapport à la composition C1.

Les bonnes propriétés de cohésion obtenues avec les compositions comprenant un élastomère diénique fortement saturé et enrichies en caoutchouc naturel (composition F1 à F3) permettent d'envisager leur utilisation en tant que flanc pour un pneumatique, comme le montrent les résultats du tableau 2 comparativement à une composition de caoutchouc témoin (composition T) conventionnellement utilisée dans des flancs de pneumatique.

Des pneumatiques dont les flancs sont constitués des compositions conformes à l'invention telles que C3 et C4 ont des performances tout à fait améliorées et sont particulièrement adaptés pour être montés sur des véhicules de tourisme ou de poids lourds.

En effet, les compositions de caoutchouc F1, F2 et F3 conformes à l'invention et constitutives de flancs d'un pneumatique confèrent au pneumatique des performances améliorées tout en maintenant à un haut niveau les performances de résistance à l'ozone.

Tableau 1

| **Composition** | C1 non conforme | C2 non-conforme | C3 conforme | C4 conforme |
|---|---|---|---|---|
| EBR (1) | 60 | 50 | 40 | 20 |
| NR (2) | 40 | 50 | 60 | 80 |
| Noir de carbone (3) | 40 | 40 | 40 | 40 |
| Antioxydant (4) | 2 | 2 | 2 | 2 |
| Cire anti-ozone | 1 | 1 | 1 | 1 |
| Acide stéarique | 1,5 | 1,5 | 1,5 | 1,5 |
| ZnO | 2,5 | 2,5 | 2,5 | 2,5 |

(suite)

| Composition | C1 non conforme | C2 non-conforme | C3 conforme | C4 conforme |
|---|---|---|---|---|
| Accélérateur (5) | 1,2 | 1,2 | 1,2 | 1,2 |
| Soufre | 0,5 | 0,5 | 0,5 | 0,5 |
| **Propriétés à cuit** | | | | |
| Traction Allongement rupture | 90 | 100 | 115 | 120 |
| Déchirabilité Energie à la rupture | 106 | 100 | 235 | 397 |

(1) Elastomère à 79% en mole d'unité éthylène, 7% en mole d'unité 1,2-cyclohexanediyle, 8% en mole de motif 1,2 de la partie butadiénique, 6% en mole de motif 1,4 de la partie butadiénique
(2) Caoutchouc naturel
(3) N234
(4) N-(1,3-diméthylbutyl)-N'-phényl-p-phenylènediamine ("Santoflex 6-PPD" société Flexsys)
(5) N-cyclohexyl-2-benzothiazol-sulfénamide (« Santocure CBS » de la société Flexsys)

Tableau 2

| Composition de flanc | T | F1 | F2 | F3 |
|---|---|---|---|---|
| NR (1) | 50 | 60 | 60 | 60 |
| BR (2) | 50 | | | |
| EBR (3) | | 40 | 40 | 40 |
| Noir de carbone (4) | 50 | 50 | 55.5 | 59.5 |
| Plastifiants | 20 | 20 | 34 | 44 |
| Anti-oxydant (5) | 5 | 5 | 5 | 5 |
| Acide stéarique | 2 | 2 | 2 | 2 |
| ZnO | 3 | 3 | 3 | 3 |
| Accélérateur (6) | 1 | 1 | 1 | 1 |
| Soufre | 2 | 2 | 2 | 2 |
| **Propriétés à cuit** | | | | |
| Allongement rupture (traction) | 100 | 113 | 109 | 104 |
| Déchirabilité<br>Déformation rupture<br>Force rupture | <br>100<br>100 | <br>135<br>165 | <br>160<br>152 | <br>163<br>136 |
| Résistance ozone<br>Allongement minimum | <br>100 | <br>180 | <br>120 | <br>80 |

(1) Caoutchouc naturel
(2) Polybutadiène CB 24 de Lanxess avec 96% (% molaire) de cis
(3) Elastomère à 79% en mole d'unité éthylène, 7% en mole d'unité 1,2-cyclohexanediyle, 8% en mole de motif 1,2 de la partie butadiénique, 6% en mole de motif 1,4 de la partie butadiénique
(4) N330
(5) N-(1,3-diméthylbutyl)-N'-phényl-p-phenylènediamine ("Santoflex 6-PPD" société Flexsys)
(6) N-cyclohexyl-2-benzothiazol-sulfénamide (« Santocure CBS » de la société Flexsys)

## Revendications

**1.** Composition de caoutchouc à base au moins de caoutchouc naturel, d'un copolymère d'éthylène et d'un 1,3-diène,

d'un noir de carbone et d'un système de réticulation, le taux de caoutchouc naturel dans la composition de caoutchouc étant supérieur à 50 pce, les unités éthylène dans le copolymère représentant plus de 50% en mole des unités monomères du copolymère.

2. Composition de caoutchouc selon la revendication 1 dans laquelle les unités éthylène dans le copolymère représentent plus de 60%, de préférence plus de 70% en mole des unités monomères du copolymère.

3. Composition de caoutchouc selon l'une quelconque des revendications 1 à 2 dans laquelle le taux de copolymère d'éthylène et d'un 1,3-diène varie dans un domaine allant de 20 à 40 pce.

4. Composition de caoutchouc selon l'une quelconque des revendications 1 à 3 dans laquelle le taux de caoutchouc naturel est supérieur à 55 pce et inférieur ou égal à 80 pce, de préférence varie dans un domaine allant de 60 à 80 pce.

5. Composition de caoutchouc selon l'une quelconque des revendications 1 à 4 dans laquelle le 1,3-diène est le 1,3-butadiène.

6. Composition de caoutchouc selon l'une quelconque des revendications 1 à 5 dans laquelle le copolymère contient des unités de formule (I) ou des unités de formule (II) ou encore des unités de formule (I) et de formule (II).

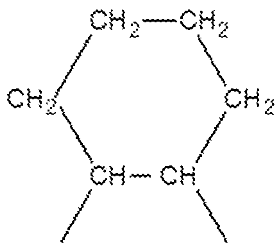

(I)

$-CH_2-CH(CH=CH_2)-$ (II)

7. Composition de caoutchouc selon la revendication 6 dans laquelle les pourcentages molaires des unités de formule (I) et des unités de formule (II) dans le copolymère, respectivement o et p, satisfont à l'équation suivante (eq. 1), de manière préférentielle à l'équation (eq. 2), o et p étant calculés sur la base de l'ensemble des unités monomères du copolymère.

$$0 < o+p \leq 25 \qquad \text{(eq. 1)}$$

$$0 < o+p < 20 \qquad \text{(eq. 2)}$$

8. Composition de caoutchouc selon l'une quelconque des revendications 1 à 7 dans laquelle le copolymère est statistique.

9. Composition de caoutchouc selon l'une quelconque des revendications 1 à 8 dans laquelle le taux de noir de carbone est compris dans un domaine allant de 25 pce à 65 pce.

10. Composition de caoutchouc selon l'une quelconque des revendications 1 à 9 dans laquelle le système de réticulation est un système de vulcanisation.

11. Pneumatique qui comprend une composition de caoutchouc définie à l'une quelconque des revendications 1 à 10, de préférence dans une portion ou la totalité d'un flanc du pneumatique.

12. Pneumatique selon la revendication 11, dans lequel la composition de caoutchouc est constitutive des flancs du pneumatique et comprend un plastifiant.

**13.** Pneumatique selon la revendication 12, dans lequel la quantité de plastifiant varie de 20 pce à 60 pce pour un taux de noir de carbone compris dans un domaine allant de 25 pce à 65 pce.

**14.** Pneumatique selon la revendication 13 dans lequel la quantité de plastifiant varie de 20 à 50 pce.

**15.** Pneumatique selon l'une quelconque des revendications 11 à 14 dans lequel le noir de carbone a une surface spécifique BET allant de 70 $m^2/g$ à 100 $m^2/g$.

**Patentansprüche**

**1.** Kautschukzusammensetzung auf Basis von mindestens Naturkautschuk, einem Copolymer von Ethylen und einem 1,3-Dien, einem Ruß und einem Vernetzungssystem, wobei der Gehalt an Naturkautschuk in der Kautschukzusammensetzungen größer als 50 phe ist, wobei die Ethyleneinheiten in dem Copolymer mehr als 50 Mol-% der Monomereinheiten des Copolymers ausmachen.

**2.** Kautschukzusammensetzung nach Anspruch 1, wobei die Ethyleneinheiten in dem Copolymer mehr als 60 Mol-% und vorzugsweise mehr als 70 Mol-% der Monomereinheiten des Copolymers ausmachen.

**3.** Kautschukzusammensetzung nach einem der Ansprüche 1 bis 2, wobei der Gehalt an Copolymer von Ethylen und einem 1,3-Dien in einem Bereich von 20 bis 40 phe variiert.

**4.** Kautschukzusammensetzung nach einem der Ansprüche 1 bis 3, wobei der Gehalt an Naturkautschuk größer als 55 phe und kleiner als oder gleich 80 phe ist und vorzugsweise in einem Bereich von 60 bis 80 phe variiert.

**5.** Kautschukzusammensetzung nach einem der Ansprüche 1 bis 4, wobei es sich bei dem 1,3-Dien um 1,3-Butadien handelt.

**6.** Kautschukzusammensetzung nach einem der Ansprüche 1 bis 5, wobei das Copolymer Einheiten der Formel (I) oder Einheiten der Formel (II) oder auch Einheiten der Formel (I) und der Formel (II) enthält.

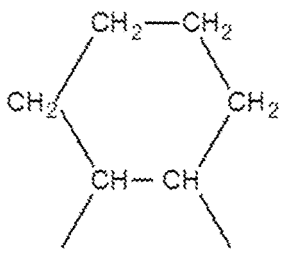

(I)

$$-CH_2-CH(CH=CH_2)- \qquad (II)$$

**7.** Kautschukzusammensetzung nach Anspruch 6, wobei die Molprozentanteile der Einheiten der Formel (I) und der Einheiten der Formel (II) in dem Copolymer, o bzw. p, die folgende Gleichung (Gl. 1) vorzugsweise die Gleichung (Gl. 2) erfüllen, wobei o und p auf der Basis aller Monomereinheiten des Copolymers berechnet werden.

$$0 < o + p \leq 25 \qquad (Gl.\ 1)$$

$$0 < o + p < 20 \qquad (Gl.\ 2)$$

**8.** Kautschukzusammensetzung nach einem der Ansprüche 1 bis 7, wobei das Copolymer statistisch ist.

**9.** Kautschukzusammensetzung nach einem der Ansprüche 1 bis 8, wobei der Gehalt an Ruß in einem Bereich von 25 phe bis 65 phe liegt.

**10.** Kautschukzusammensetzung nach einem der Ansprüche 1 bis 9, wobei es sich bei dem Vernetzungssystem um ein Vulkanisationssystem handelt.

**11.** Reifen, der eine Kautschukzusammensetzung gemäß einem der Ansprüche 1 bis 10 umfasst, vorzugsweise in einem Teil oder der Gesamtheit einer Seitenwand des Reifens.

**12.** Reifen nach Anspruch 11, wobei die Kautschukzusammensetzung die Seitenwände des Reifens bildet und einen Weichmacher umfasst.

**13.** Reifen nach Anspruch 12, wobei die Menge an Weichmacher von 20 phe bis 60 phe für einen Gehalt an Ruß in einem Bereich von 25 phe bis 65 phe liegt.

**14.** Reifen nach Anspruch 13, wobei die Menge an Weichmacher von 20 bis 50 phe variiert.

**15.** Reifen nach einem der Ansprüche 11 bis 14, wobei der Ruß eine spezifische BET-Oberfläche im Bereich von 70 $m^2/g$ bis 100 $m^2/g$ aufweist.

**Claims**

**1.** Rubber composition based at least on natural rubber, on a copolymer of ethylene and of a 1,3-diene, on a carbon black and on a crosslinking system, the natural rubber content in the rubber composition being greater than 50 phr, the ethylene units in the copolymer representing more than 50 mol% of the monomer units of the copolymer.

**2.** Rubber composition according to Claim 1 in which the ethylene units in the copolymer represent more than 60 mol%, preferably more than 70 mol% of the monomer units of the copolymer.

**3.** Rubber composition according to either one of Claims 1 and 2, in which the content of copolymer of ethylene and of a 1,3-diene varies in a range extending from 20 to 40 phr.

**4.** Rubber composition according to any one of Claims 1 to 3, in which the natural rubber content is greater than 55 phr and less than or equal to 80 phr, preferably varies within a range extending from 60 to 80 phr.

**5.** Rubber composition according to any one of Claims 1 to 4, in which the 1,3-diene is 1,3-butadiene.

**6.** Rubber composition according to any one of Claims 1 to 5, in which the copolymer contains units of formula (I) or units of formula (II) or else units of formula (I) and of formula (II).

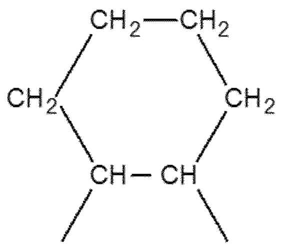

(I)

$-CH_2-CH(CH=CH_2)-$ (II)

**7.** Rubber composition according to Claim 6, in which the molar percentages of the units of formula (I) and of the units of formula (II) in the copolymer, respectively o and p, satisfy the following equation (eq. 1), preferentially satisfy the equation (eq. 2), o and p being calculated on the basis of all the monomer units of the copolymer.

$$0 < o+p \leq 25 \qquad \text{(eq. 1)}$$

$$0 < o+p < 20 \qquad \text{(eq. 2)}$$

**8.** Rubber composition according to any one of Claims 1 to 7, in which the copolymer is a statistical copolymer.

**9.** Rubber composition according to any one of Claims 1 to 8, in which the carbon black content is within a range extending from 25 phr to 65 phr.

**10.** Rubber composition according to any one of Claims 1 to 9, in which the crosslinking system is a vulcanization system.

**11.** Tyre which comprises a rubber composition defined in any one of Claims 1 to 10, preferably in a portion or all of a tyre sidewall.

**12.** Tyre according to Claim 11, in which the rubber composition constitutes the sidewalls of the tyre and comprises a plasticizer.

**13.** Tyre according to Claim 12, in which the amount of plasticizer ranges from 20 phr to 60 phr for a carbon black content within a range extending from 25 phr to 65 phr.

**14.** Tyre according to Claim 13, in which the amount of plasticizer ranges from 20 to 50 phr.

**15.** Tyre according to any one of Claims 11 to 14, in which the carbon black has a BET specific surface area ranging from 70 $m^2/g$ to 100 $m^2/g$.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2014114607 A1
- EP 2682423 A1
- EP 1092731 A
- WO 2004035639 A
- WO 2007054223 A
- WO 2007054224 A
- WO 2017093654 A1
- WO 2018020122 A1
- WO 2018020123 A1